# EUROPEAN PATENT SPECIFICATION

(11) **EP 1 648 684 B1**
(45) Date of publication and mention of the grant of the patent: **06.11.2013**
(21) Application number: 04740051.0
(22) Date of filing: 18.06.2004
(51) Int. Cl.: B29C 51/26

(54) **APPARATUS FOR THERMOFORMING HOLLOW BODIES OF THERMOPLASTIC MATERIAL**
VORRICHTUNG ZUM HERSTELLEN VON HOHLEN GEGENSTÄNDEN AUS KUNSTSTOFFMATERIAL DURCH WARMUMFORMEN
APPAREIL DE THERMOFORMAGE DE CORPS CREUX EN MATERIAU THERMOPLASTIQUE

(30) Priority: 24.07.2003 IT MI20031520
(43) Date of publication of application: 26.04.2006
(73) Proprietor: Tecnos S.P.A., 20014 Nerviano Milan (IT)
(72) Inventor: CASTIGLIONI, Maurizio, I-20151 Busto Arsizio Varese (IT); CRIVELLI, Maurizio, I-20010 Pogliano M.se Milan (IT); D'ADDA, Luciano, I-20010 Pogliano M.se Milan (IT); MARIANI, Davide, I-21047 Saronno Varese (IT)
(74) Representative: Coloberti, Luigi
(86) International application number: PCT/EP2004/006605
(87) International publication number: WO 2005/014262

(56) References cited:
- WO-A-99/64221
- DE-A- 1 779 858
- DE-A- 2 138 112
- DE-A- 2 418 445
- DE-A- 2 508 529
- DE-B- 2 630 021

## Description

### FIELD OF THE INVENTION

This invention refers to the manufacture of hollow bodies in thermoformed plastic material, in particular it is directed to a method and an apparatus for thermoforming bodies of any shape and size, starting from a sheet of thermoformable plastic material which is appropriately supported and heated to a plasticizing temperature, and then shaped by making it adhere by vacuum to the cavity or to the shaping surface of a mold.

Thermoforming is a generally known technology widely used in several fields; thermoforming apparatuses or systems are described for example in EP 0 813 950 and EP 0 997 258.

Generally speaking, conventional thermoforming consists in placing a sheet of plastic material on a suitable supporting frame structure provided with clamping means for locking the plastic sheet in a position lying above or below a mold; the sheet of material is heated to a suitable plasticizing temperature, maintaining it in a substantially flat condition, or pneumatically supporting the sheet to control the formation of a sag and to prevent undesirable stretching.

Moreover, whenever molds with very deep cavities or with highly accentuated impressions are used, during the vacuum forming of the sheet, excessive and uncontrolled stretching can occur in certain areas of the sheet, which are liable to weaken the molded article and make it unsuitable for its intended use.

Consequently, with the conventional thermoforming technology it is necessary to resort to particular arrangements, which make the production process and the apparatus highly complex, with consequent negative effects in terms of longer processing times and higher production costs.

In order to prevent the molded articles from presenting excessively stretched and weakened areas, having limited thicknesses not complying with certain regulations, for example in the manufacture of fuel tanks, the arrangement commonly used consists in using plastic sheets of greater thickness so that the latter, due to the inevitable stretching, does not drop below thickness values considered as dangerous.

However, the use of plastic sheets of greater thickness entails a greater consumption of material and consequently higher production costs for the finished product.

Another cause of waste of material, inherent in the usual thermoforming technology, consists in the excessive scraps produced for each individual molded article, due to the need to use sheets of material of considerably larger dimensions than those of the mold, necessary to support and lock the sheet to a window of a vacuum box containing the mold.

The problems of scraps and the excessive consumption of material, with the conventional thermoforming methods, are even more serious whenever particularly expensive layered materials are used.

Therefore, with the usual methods and the usual thermoforming apparatuses, in order to obviate the problems related to reduction of the thicknesses caused by stretching of the material, it is necessary to use sheets of plastic material of considerable thickness, and having considerably larger dimensions than those theoretically necessary to produce the molded article; moreover, controlling the stretching and thicknesses of the material in the molded article proves to be extremely difficult in the case of articles having a complex or particular geometrical shape.

Sheet-clamping frames suitable to change their geometrical configuration, provided with mechanical clamping to provide an enrichment, as disclosed in the preamble of claim 1, are disclosed in DE-A-2508529 and DE-A-2418445, while a pneumatic clamping frame is disclosed in DE-A-2630021.

### OBJECTS OF THE INVENTION

The main object of this invention is to provide a thermoforming apparatus whereby it is possible to simplify the production process, and at the same time reduce consumption and waste of material.

A still further object of this invention is to provide an apparatus for thermoforming hollow bodies in plastic material in a mold, capable of achieving the aforementioned advantages, which make use of a system for supporting the sheet which is integrated into the mold itself, whereby it is possible to pre-shape the plastic sheet in order to have a greater quantity of material in particular areas during the thermoforming, and at the same time allowing sufficient control of the thicknesses and the stretching degree.

### BRIEF DESCRIPTION OF THE INVENTION

These and further objects and advantages of this invention are achieved by, respectively by means of a thermoforming apparatus according to the claim 1.

### BRIEF DESCRIPTION OF THE FIGURES

These and further advantages of the apparatus according to the invention, and some preferential embodiments will be more clearly evident from the accompanying drawings, In which:
Fig. 1 shows a top view of a first embodiment of the apparatus comprising a substantially flat shaped mold;
Fig. 2 shows a side view of the apparatus along the line 2-2 of Fig. 1;
Fig. 3 shows a cross-sectional view along the line 3-3 of Fig. 1, during the heating step;
Fig. 4 shows a view similar to that of Fig. 3, to show the formation of a sag, at the end of the heating step;
Fig. 5 shows a view similar to that of the preceding figures, to show the pre-shaping step;
Fig. 6 again shows a view similar to that of the preceding figures, during the thermoforming in the mold;
Fig. 7 shows a top view of the embodiment of the invention, which makes use of a substantially three-dimensional shaped mold;
Fig. 8 shows an enlarged view of a portion of the holding frame for gripping the sheet of material of Fig. 7;
Fig. 9 shows a cross-sectional view along the line 9-9 of Fig. 8;
Fig. 10 shows a cross-sectional view along the line 10-10 of Fig. 7, during the heating step;
Fig. 11 shows a view similar to that of Fig. 10 during the formation of the sag;
Fig. 12 shows a cross-sectional view similar to those of the preceding figures during the pre-shaping step;
Fig. 13 again shows a cross-sectional view similar to the preceding figures during the thermoforming step;
Fig. 14 shows an enlarged detail of the right-hand side of the mold of Fig. 13.

### DETAILED DESCRIPTION OF THE INVENTION

With reference to the figures from 1 to 6 a description will be now given of an embodiment of an apparatus, which is not part of this invention.

In the example shown, the apparatus as a whole indicated by reference 10, comprises a substantially flat mold 11, having a shaped cavity 12 consisting of a deep cavity, which is joining to one edge 11' of the mold 11 by a slanting surface 13, or otherwise shaped surface. In the case shown, the mold 11 is of female type having a cavity 12, however the shaping surface of the mold may also be different from the one shown, resulting of male type, partially or totally in relief.

The apparatus also comprises a first sheet holding frame 14, having a variable geometry, for gripping a sheet 15 of thermoformable plastic material along its edges.

In the case shown, the sheet holding frame 14 for gripping the sheet 15 of plastic material is square shaped, with the sides of the frame 14 disposed outside to the peripheral edges of the mold 11; it is obvious however that the shape of the frame 14 may also differ from the one shown, to conform to the geometrical shape of the mold.

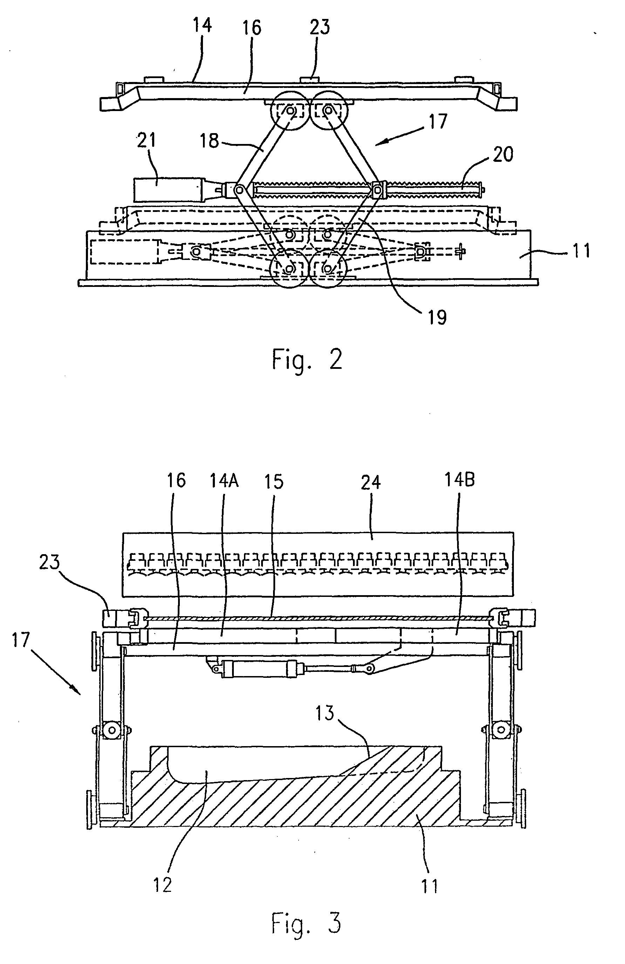

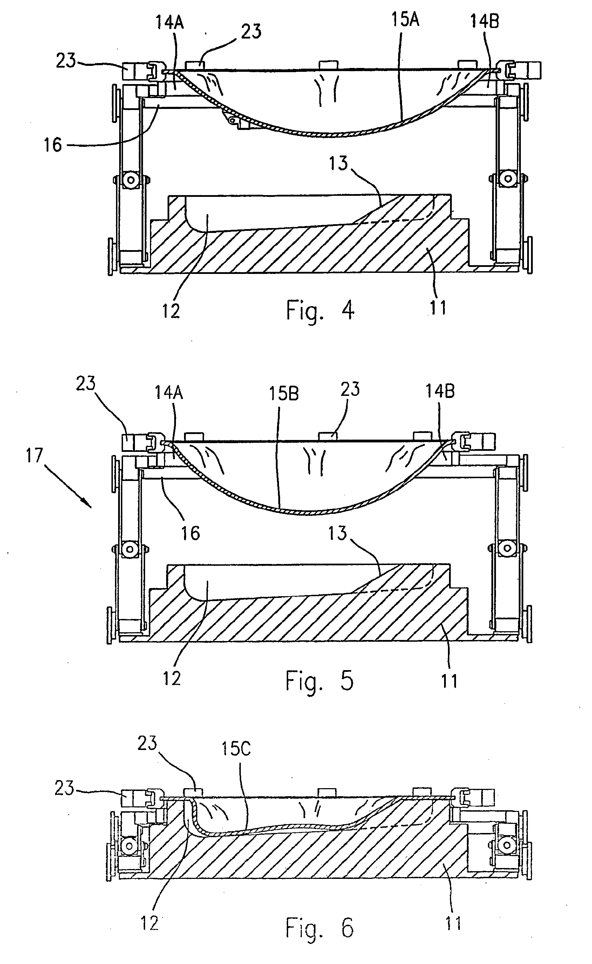

The sheet holding frame 14 is in turn supported by a second frame 16 vertically movable between a raised position and a lowered position with respect to the edge of the mold, as shown in the example of figure 2 and respectively in figures 3 and 6 of the accompanying drawings.

The rising and lowering movement of the frame 16, with the frame 14 for gripping the sheet 15, can be obtained by any control means, for example by hydraulic or pneumatic cylinders, or by a mechanical system suitable for the purpose.

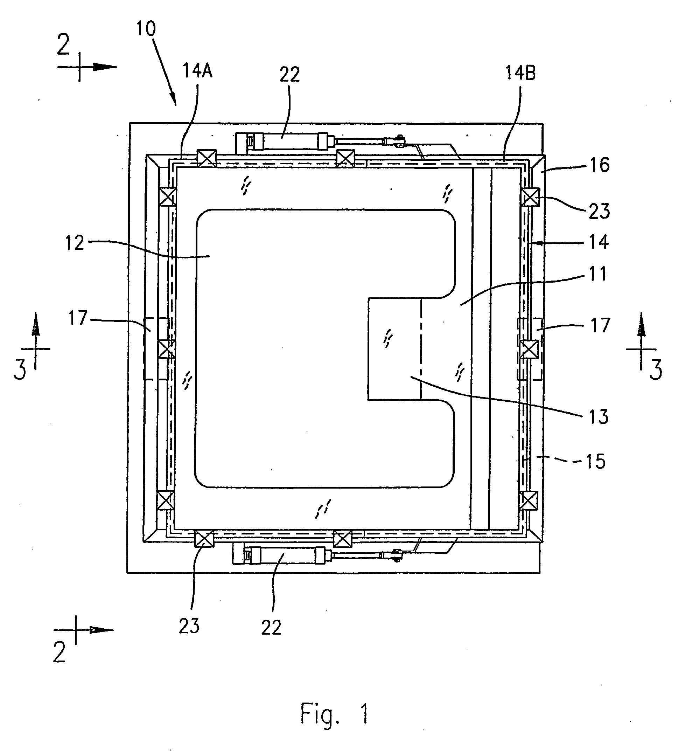

In the example shown in figures 1-6, use is made of two pantograph systems 17 on opposite sides of the mold 11; each system 17 comprises articulated rods 18, 19, pivoted to the base cf the mold 11 and to the frame 16; the articulation points between the rods of each system 17 are connected by threaded bush and screw unit 20 operated by a reversible electric motor 21. By rotating the screws in one direction or in the opposite direction, acting on the rods 18 and 19, it is possible to raise and lower the two frames 14 and 16 with respect to the mold 11.

As mentioned previously, the holding frame 14 for gripping the edges of the plastic sheet 15, is provided with a variable geometry designed to allow a pre-shaping of the sheet 15 and the enrichment of material in one or more pre-established shaping areas of the mold, after its heating and before its deposition in the thermoforming mold.

According to the example of figures 1-6, the frame 14 for gripping the sheet is geometrically deformable starting from a flat configuration, which adapts to the shape of the mold itself. The initially flat shape of the frame 14 proves to be advantageous for supporting the sheet 15 during the heating step, or during the transfer of the sheet 15 from suitable gripping means and its conveyance along a processing line, to the frame 14 structurally and functionally integrated with the mold 11.

In the example shown, the frame 14 is substantially square-shaped; its outline and geometry can be modified by means of the relative movements between two frame portions, which can be approached or moved one in respect to the other.

More precisely, the frame 14 comprises a first stationary frame portion 14A secured to the supporting frame 16, and at least a second movable frame portion 14B, supported for sliding and being shifted towards and away from the stationary frame portion 14A; hydraulic or pneumatic actuators 22 are secured to the sides of the frame 16 and to the movable portion 14B of the frame 14 in order to selectively vary, in a controlled manner, the geometry and the configuration of the latter.

The frame 14 is also provided with clamping means 23 for gripping and holding the plastic sheet 15 along its peripheral edges, or part thereof.

The clamping means 23 for gripping the plastic sheet 15 can be shaped in any way and disposed at the sides of the frame portions 14A and 14B, to hold the sheet 15 in pre-established points, along part or the entire edge of two or more opposite sides.

The clamping means 23 can be of any suitable type, for example of the mechanical, pneumatic, or vacuum type or their combination.

In the case of figure 1, the frame 14 for gripping the plastic sheet 15 has been shown in the form of a flat frame comprising two telescopically sliding parts 14A and 14B, which maintain their flat disposition also in the geometrically modified configuration. It is obvious however that other conformations and/or dispositions of the frame 14 for gripping the plastic sheet are possible; for example the frame 14 may comprises different numbers of relatively movable sections, capable of sliding in a longitudinal direction, and/or to rotate in relation to one another, and to be angularly oriented, without excluding the possibility of maintaining a flat or a different spatial disposition of the various sections of the frame, according to characteristics, shape of the mold and thermoforming requirements.

The figures from 3 to 6 show the main steps of the thermoforming method according to the example under consideration.

As shown in figure 3, a sheet 15 of plastic material, arriving for example from a processing line along which it has been pre-heated to a first temperature, in this specific case is aligned to the mold 11 holding the sheet 15 along its peripheral edges by means of clamping members 23, or equivalent, supported by the variable geometry frame 14. In this condition, the two frame portions 14A and 14B are shifted apart from each other to maintain the sheet 15 in an initially flat condition, whilst it is brought to a suitable plasticizing temperature by heating means 24; the two frames 14 and 16 are also in their raised position above the mold 11.

During the heating step, as shown in figure 4, the sheet of plastic material 15 gradually tends to form, by gravity, a downwardly facing sag, indicated by reference 15A in figure 4.

If the heated sheet 15 in these conditions were to be immediately lowered against the mold 11, and subjected to vacuum, it is obvious that the sag 15A would first come into contact with the right-hand portion of the mold, undergoing stretching and uncontrolled local deformation in correspondence with the edges or the internal corners of the cavity 12 of the mold, where the thickness of the sheet 15 would tend to undergo the greatest stretching and thinning, compared to the remaining parts of the molded article.

Conversely, as shown in Fig. 5, after the heating and formation of the sag 15A, an enrichment step for the material is carried out in pre-established points or areas of the mold by adequately pre-shaping the sheet of material as indicated by reference 158 in Fig. 5. This can be obtained by moving and approaching the peripheral edges of the sheet 15 in relation to one another, bringing them closer, raising, lowering and/or angularly rotating them. In the case of the example shown in Figures 1-6 this can be made by acting on the variable geometry frame 14, by bringing the movable frame portion 15B close to the stationary frame portion 15A.

Pre-shaping the sheet of material 15, by linearly and/or angularly moving, and/or rotating the various parts of the variable geometry frame 14, gives rise to a greater abundance of plastic material destined to be brought into contact with shaping surface areas or cavity 12 of the mold, without undergoing any substantial deformation during the lowering movement of the frames 14 and 16, as shown in the example of Fig. 6. The pre-shaped sheet 15 is then rested on the mold, partially adapting to its shaping surface, without undergoing substantial stretching.

At this point, it is possible to complete the thermoforming of the sheet by subjecting to vacuum, in a per se known way, causing it to adhere perfectly to the shaping surface of the mold.

It is obvious that, during the vacuum forming, the sheet 10 of material will undergo less stretching in the corners or in some critical parts of the mold; such stretching may be selectively controlled both by differentiating the movements between the various parts of the holding frame, and by controlling, in this specific case, the formation of the sag during the heating step.

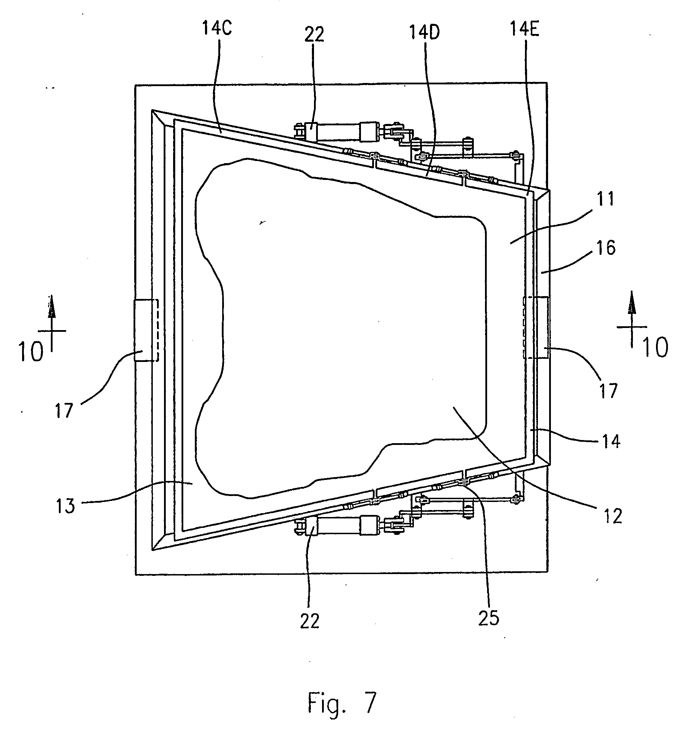

The figures from 7 to 14 show the embodiment and other characteristics of the apparatus according to the invention, which is particularly suitable for a mold having a complex, three-dimensional outline. In these figures the same reference numbers have been used to indicate parts similar or equivalent to those of the preceding example; moreover, the operating method of the apparatus of figs. 7-14, is substantially identical to that of the previously described apparatus, with the difference that in this second case the holding frame 14 for gripping the sheet 15 is geometrically deformable in a three-dimensional way to create an enrichment of material always in conformity with the outline and shape of the mold.

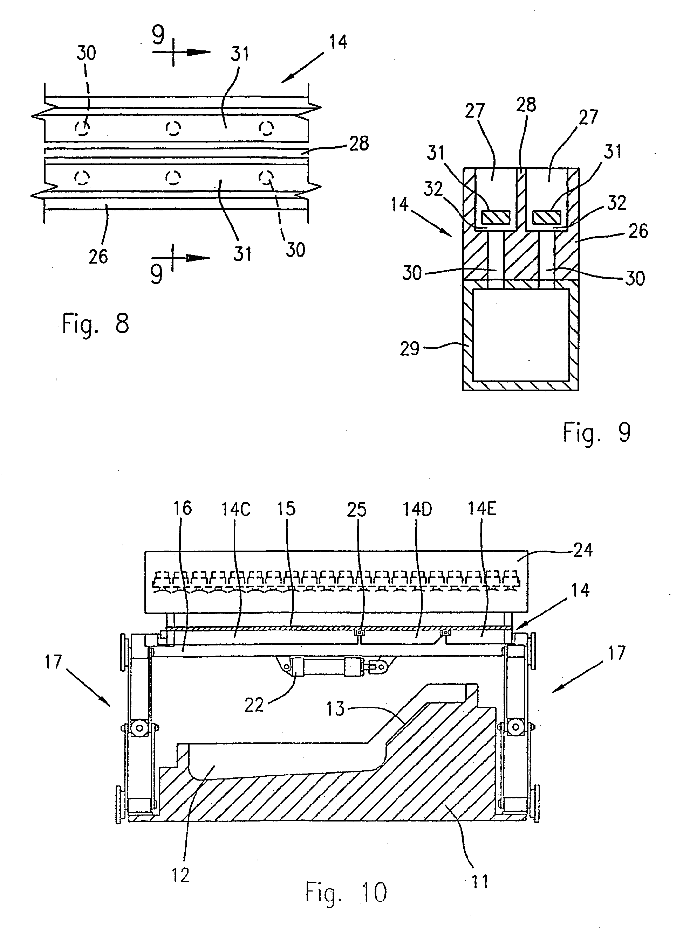

Here again, the mold 11 is integrated with a system 17 for raising the support frame 16 and the variable geometry frame 14. The frame 14 in turn, on two opposing sides, is provided with a first stationery portion 14C, a second movable portion 14D hinged in 25 to the stationery portion 14C to rotate angularly upwards, in an anticlockwise direction as shown in Fig. 10, and also comprises a third frame portion 14E hinged in 25' to the intermediate frame portion 14D to angularly rotate in a direction opposite to the previous one.

In the case of Fig. 7, the frame 14 for gripping the edges of the plastic sheet 15 is provided with vacuum-operated clamping means, which act around the entire perimeter of the sheet.

In this connection, the frame 14 comprises an annular vacuum frame 26 having two top open slots 27, separated by an intermediate baffle 28; both the slots 27 communicate with a tubular manifold 29 by means of a plurality of suction holes 30 aligned in the longitudinal direction of the slots 27. The tubular manifold 29 is also connected to a vacuum or air suction source, by means of a flexible hose or in any other way.

Provided close to the bottom of each slot 27, in a position sightly spaced apart from the suction holes 30, is a rectangular bar 31 having a width smaller than the same slot so as to form with the bottom wall of the slot, a narrow flow-pass 32 communicating with the holes 30, which creates a strong air suction effect; such solution has proved to be extremely advantageous in that it creates a double pneumatic force for retaining the sheet along the entire peripheral edge.

Fig. 7 of the drawings more clearly shows another feature of the apparatus, capable of achieving the advantages of the invention.

As can be seen in this figure, the mold 11 has a trapezoidal shape, or more in general, a wholly irregular shape.

In the case of a mold of this kind, when using a thermoforming apparatus of conventional type, it would be necessary to use square or rectangularly-shaped sheets of material 15, that is to say, having a shape and size different and considerably greater than those of the mold; this would give rise to a greater amount of scraps and loss of costly material.

According to another feature of the invention, the mold 11 and the frame 14 for gripping the plastic sheet 15, together with the means for supporting and raising the frame itself, constitute an integrated unit in which the frame 14 for gripping the sheet of material is disposed peripherically in a close vicinity, adapting to the shape of the mold.

Likewise, sheets of material 15 of corresponding shape may be used, resulting in a substantial saving of material.

The figures from 10 to 13 again show the basic steps of a thermoforming method when using the claimed apparatus. After the plastic sheet 15 has been aligned with the mold 11, holding it by vacuum along the edges by means of the variable geometry frame 14, the heating step is carried out until a sag 15A is formed, in a controlled way as shown in fig. 10.

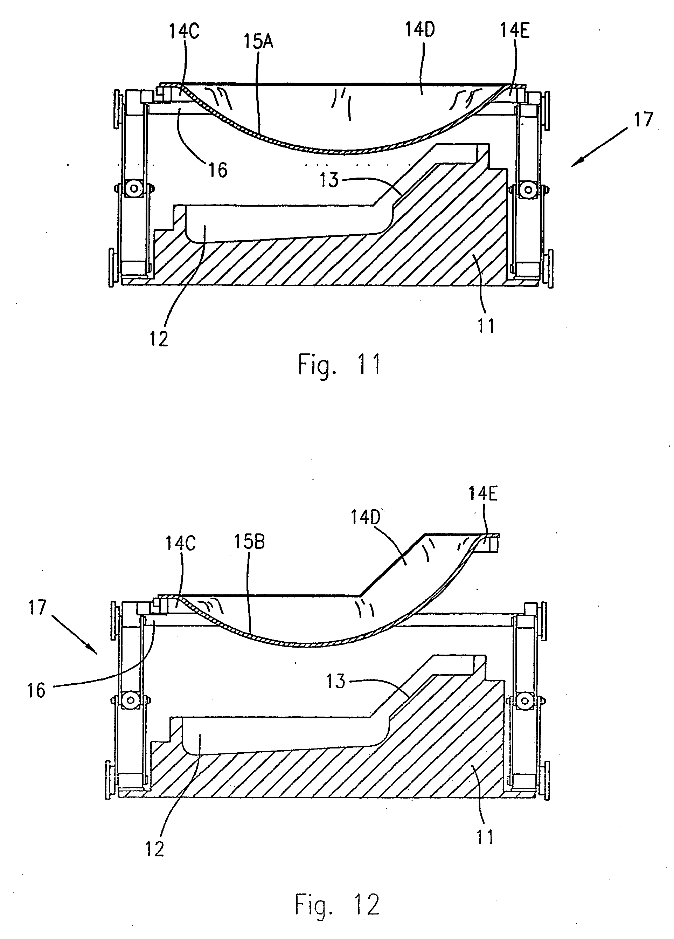

After the formation of the sag 15A fig. 11, the pre-shaping and enrichment step is carried out by modifying the geometry of the frame 14, as shown in Fig. 12, by operating the cylinders 22 which, by means of the system of articulated rods control the upward rotation of the two frame portions 16D, which are slanted in a way substantially conforming to the inclination of the surface 13 of the mold; the frame portions 16E, which remain in this case parallel to the edge of the mold 11, simultaneously undergo a back rotation, in the opposite direction to the previous one.

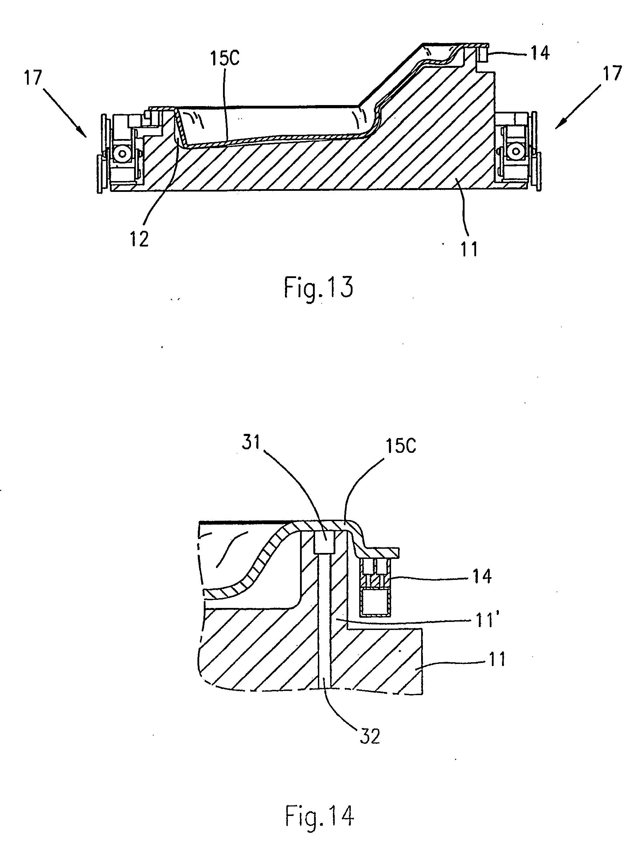

Upon completion of the pre-shaping and enrichment step, as indicated by reference 15B in Fig. 12, the pre-shaped sheet of plastic material is brought down over the mold 11, Fig. 13, so as to exploit the maximum enrichment of material during the subsequent vacuum forming step.

Also in the case of the example of figures 10-14, the variable geometry frame 14 can comprise several frame portions, with the various frame portions capable of sliding and/or rotating in relation to one another according to pre-established pivoting axes, or differently moving to obtain a pre-shaping and enrichment which are as similar as possible to the pattern of the mold.

Figs. 10-14 show a vacuum-operated gripping device for clamping the sheets 15 by the variable geometry frame 14, which proves to be extremely advantageous compared to a mechanical type, in that it enables the plastic sheet 15 to be pneumatically held on one side face, along the peripheral edges, while leaving the other side face completely free.

This solution proves to be advantageous in that it enables the sheets of plastic material to be picked up and transferred, supporting them by vacuum, in a controlled way, along a pre-heating and feeding line, thereby contributing to simplify the production process.

In the preceding examples, the enrichment of the sheet 15 above the mold 11 is obtained by firstly forming, by gravity, a downwardly pending sag, in a position above the mold 11.

Within the scope of the invention, other solutions are possible: for example, the position of the mold and of the sheet 15 of plastic material could be reversed compared to that shown, contemplating an aligned disposition of the sheet 15 of material, in a position beneath the mold 11.

Moreover, by suitably pneumatically supporting the sheet 15 of material during the heating step, the sag could be formed upwards, or be totally absent, in relation to the thermoforming requirements and the characteristics of the mold or of the article to be produced.

Prior to the vacuum forming, and after the enrichment step, an intermediate pre-shaping phase can be carried out by means of a suitable shaping plug.

Fig. 14 of the drawings shows a further feature of the mold, forming part of the integrated apparatus according to the invention.

As shown, the mold 11 has a raised edge 11' which can be shaped to improve the seal against the sheet material 15 during the vacuum forming. In fact, it can be seen that on the outer side of the raised edge 11' of the mold, the latter is peripherally provided with a lowered step, which enables the frame 14 to be lowered or shifted into a backward position with respect to the edge 11' of the mold.

The vacuum seal can be improved by providing a cavity 31 along the raised edge 11' of the mold, which can be connected to a vacuum or source air intake by means of a plurality of suction holes 32 longitudinally aligned with the slot, or in any other way.

It is understood therefore that what has been described and shown with reference to the accompanying drawings, has been given purely in order to illustrate the general features of the thermoforming apparatus according to this invention is defined by the claim.

## Claims

1. An apparatus for the manufacture of thermoformed bodies, from a sheet of plastic material (15),
comprising:
a thermoforming mold (11) having a sheet shaping surface (12, 13);
a movable clamping frame (14) supported by a second frame (16) in order to be vertically movable between a raised and a lowered position with respect to the edge of the mould, for holding the sheet (15), said clamping frame (14) peripherally extending around the mold (11); and
clamping means (26) for gripping the peripheral edges of the sheet (15) along at least part of the sides of the clamping frame (14);
the clamping frame (14) having a geometrically variable shape providing at least first and second frame portions (14A, 14B; 14C, 14D, 14E) movable in relation to each other;
control means (22) being operatively connected to said movable frame portions (14B; 14D), to selectively vary their disposition in conformity with the shaping surface (12, 13) of the mold (11); and
support means (16, 17) for supporting the clamping frame (14), whereby
the support means (16, 17) are positioned and conformed to move the clamping frame (14) between a raised and a lowered position with respect to the mold (11);
**characterised in that**:
the clamping frame (14) comprises an annular vacuum frame (26) having two top-open slots (27) along a front side of the clamping frame (14) separated by an intermediate baffle (28) parallely extending along opposite sides, both slots (27) communicating with a tubular manifold (29) by a plurality of suction holes (30) aligned in the longitudinal direction of the slots; a bar (31) having a width smaller than the slots (27) is provided close to the bottom wall of each slot (27), slightly spaced apart and above the bottom wall of each slot (27); said bar (31) defining, together with said bottom wall a narrow air flow passage (32) communicating with said air suction holes (30),
the thermoforming mold (11), the sheet clamping frame (14) and the support means (16, 17) for supporting and raising the clamping frame (14) consitute an integrated unit, in which the clamping frame (14) for gripping the sheet material is disposed peripherically in close vicinity to the mould adapting to the shape thereof.

## Patentansprüche

1. Eine Vorrichtung zur Herstellung von thermogeformten Körpern aus einer Bahn aus Kunststoffmaterial (15), umfassend:
eine Thermoform-Form (11), die eine bahnformende Oberfläche (12, 13) aufweist;
einen beweglichen Spannrahmen (14), der durch einen zweiten Rahmen (16) gehalten wird, um vertikal beweglich zwischen einer erhöhten und einer herabgesetzten Position in Bezug zu der Kante der Form zu sein, zum Aufnehmen der Bahn (15), wobei sich der Spannrahmen (14) peripher um die Form (11) erstreckt;
und
Spannmittel (26) zum Fassen der peripheren Kanten der Bahn (15) entlang mindestens eines Teils der Seiten des Spannrahmens (14);
wobei der Spannrahmen (14) eine geometrisch variable Form aufweist, die mindestens erste und zweite Rahmenbereiche (14A, 14B; 14C, 14D, 14E) bereitstellt, die in Bezug zueinander beweglich sind;
Steuermittel (22), die mit den beweglichen Rahmenbereichen (14B; 14D) operativ verbunden sind, um selektiv deren Anordnung in Übereinstimmung mit der formenden Oberfläche (12, 13) der Form (11) zu verändern; und
Haltemittel (16, 17) zum Halten des Spannrahmens (14), wobei
die Haltemittel (16, 17) positioniert und angepasst sind, um den Spannrahmen (14) zwischen einer erhöhten und einer herabgesetzten Position in Bezug zu der Form (11) zu bewegen;
**dadurch gekennzeichnet, dass**:
der Spannrahmen (14) einen ringförmigen Vakuumrahmen (26) umfasst, der zwei Obenseite-Öffnungsschlitze (27) entlang einer Vorderseite des Spannrahmens (14), getrennt durch ein dazwischenliegendes Baffle (28), das sich entlang der Gegenseiten parallel erstreckt, aufweist, beide Schlitze (27) mit einem röhrenförmigen Verteiler (29) durch mehrere Ansaugöffnungen (30), ausgerichtet in der Längsrichtung der Schlitze, in Kontakt stehen;
eine Stange (31), die eine Breite schmaler als die Schlitze (27) aufweist, ist nahe der Unterseitenwand jedes Schlitzes (27), geringfügig räumlich getrennt und über der Unterseitenwand jedes Schlitzes (27), bereitgestellt;
wobei die Stange (31) zusammen mit der Unterseitenwand einen engen Luftstromdurchlass (32), der mit den Ansaugöffnungen (30) in Kontakt steht, definiert,
die Thermoform-Form (11), der Bahn-Spannrahmen (14) und die Haltemittel (16, 17) zum Fassen und Heben des Spannrahmens (14) eine integrierte Einheit bilden, in welcher der Spannrahmen (14) zum Fassen des Bahnmaterials peripherisch in enger Nähe zu der Form, angepasst an die Form davon, angeordnet ist.

## Revendications

1. Appareil servant à fabriquer des objets thermoformés, à partir d'une feuille de matière plastique (15),
comprenant:
un moule de thermoformage (11) ayant une surface de mise en forme de feuille (12, 13);
un cadre de serrage mobile (14) soutenu par un second cadre (16) de façon à être verticalement mobile entre une position levée et une position baissée par rapport au bord du moule et servant à maintenir la feuille (15), ledit cadre de serrage (14) s'étendant de façon périphérique autour du moule (11); et
un moyen de serrage (26) servant à saisir les bords périphériques de la feuille (15) le long d'au moins une partie des côtés du cadre de serrage (14);
le cadre de serrage (14) ayant une forme géométriquement variable présentant au moins une première et une deuxième partie de cadre (14A, 14B; 14C, 14D, 14E) mobiles l'une par rapport à l'autre;
un moyen de commande (22) relié de manière fonctionnelle auxdites parties de cadre mobiles (14B; 14D), afin de modifier de manière sélective leur disposition conformément à la surface de mise en forme (12, 13) du moule (11); et
un moyen formant support (16, 17) servant à soutenir le cadre de serrage (14),
le moyen formant support (16, 17) étant placé et conformé pour déplacer le cadre de serrage (14) entre une position levée et une position baissée par rapport au moule (11);
**caractérisé en ce que**:
le cadre de serrage (14) comprend un cadre à vide annulaire (26) ayant deux fentes ouvertes en partie supérieure (27), le long d'un côté avant du cadre de serrage (14), séparées par une cloison intermédiaire (28) s'étendant parallèlement le long de côtés opposés, les deux fentes (27) communiquant avec un collecteur tubulaire (29) par une pluralité de trous de succion (30) alignés dans la direction longitudinale des fentes;
une barre (31) ayant une largeur inférieure aux fentes (27) est prévue à proximité de la paroi inférieure de chaque fente (27), en étant légèrement espacée et au-dessus de la paroi inférieure de chaque fente (27) ; ladite barre (31) formant, conjointement avec ladite paroi inférieure, un étroit passage d'écoulement d'air (32) communiquant avec lesdits trous de succion d'air (30),
le moule de thermoformage (11), le cadre de serrage de feuille (14) et le moyen formant support (16, 17) servant à soutenir et lever le cadre de serrage (14) constituent une unité intégrée dans laquelle le cadre de serrage (14) servant à saisir la matière en feuille est disposé de façon périphérique à proximité du moule en s'adaptant à la forme de ce dernier.
